# EUROPEAN PATENT SPECIFICATION

(11) **EP 0 274 817 B1**
(45) Date of publication and mention of the grant of the patent: **02.11.1995**
(21) Application number: 87308617.7
(22) Date of filing: 29.09.1987
(51) Int. Cl.: G11B 20/18, G06F 11/10

(54) **Data storage system**
Datenspeichersystem
Système de mémoire de données

(30) Priority: 12.01.1987 US 3961
(43) Date of publication of application: 20.07.1988
(73) Proprietor: SEAGATE TECHNOLOGY INTERNATIONAL, Georgetown, Grand Cayman Island (KY)
(72) Inventor: Hartness, Carl Bruce, Bloomington Minnesota 55431 (US)
(74) Representative: Sturt, Clifford Mark

(56) References cited:
- EP-A- 0 039 565
- EP-A- 0 156 724
- EP-A- 0 201 330
- US-A- 4 722 085

## Description

This invention relates to data storage systems.

The device of choice today for non-volatile mass storage of data is a magnetic disk storage system. The type of magnetic disk storage system of particular interest here is the so-called hard disk drive having, not surprisingly, one or more rigid disks rotating at relatively high speed. Suspended aerodynamically a few microinches from each surface of the disk is a transducer device or head for reading and writing data on the disk. In larger data processing installations, there may be several drives all providing data storage for a single central computer. For some time, the reading or writing of several disk surfaces simultaneously has been contemplated in an effort to improve data rates between individual disk storage systems and the control computer. With the recent advent of large semiconductor memories, the difficult problem of synchronisation of data transmission between the disk storage systems and the central computer has been solved by the expedient of using such semiconductor memories as a buffer to compensate for differences in angular position of the disks.

While disk storage system reliability has improved substantially over the last few years, they are nonetheless electromechanical and as such liable to occasional failures. These failures may be caused by defect in circuitry which affects the feedback function, in which case no data has been lost. It is only necessary to repair the defective circuitry to gain access to the data. If the failure comes at an inconvenient time, however, the delays may cause great expense to the users. If the failure occurs in writing circuitry or on the disk itself, then data is permanently lost. If the failure is a so-called head crash where the transducer device or head strikes and destroys the disk surface, then that data is permanently lost also. These cases usually are characterised by the fact that only a single drive or drive controller is involved.

In many cases, the data stored on the disks is much more valuable than the disk storage systems themselves. This may arise in the situation where the data represents a major investment in computer or human time. Sometimes the data has time-related value, say in a real-time environment or when printing time-sensitive materials such as paycheques or management reports. Therefore, one must usually design such data storage systems for high reliability since the cost of losing data due to failure is often unacceptably high. Accordingly, there is substantial motivation for avoiding such loss or delay of access to the data.

A well-known prior art solution to some of these problems involves the use of redundant data to detect and to correct data. A so-called row and column error correction method uses row and column parity. That is, bits of a data block are arranged in rows and columns (at least conceptually) and a parity bit for each row and column is recorded with the data block. A parity bit is chosen according to a preset rule to indicate for the bit group involved, such as a row or column, whether the number of binary 1s in the bit group is odd or even. Usually odd parity is used, where the parity bit is set to 1 if the number of "1" data bits in the group involved is even, so that the total number of bits for a group is odd, thus assuring that at least one bit is present in every case.

If parity in a single row and a single column is incorrect when a block is read back from the disk one can assume with some degree of assurance that the bit common to both the row and the column with incorrect parity is itself incorrect. The error can be corrected by inverting this common bit. It is usual to break the data into bit row groups of relatively short bytes of say 6 or 8 bits, with a row parity bit recorded for each byte. On the other hand, the column group of bits may be quite long.

An alternative method for error detection and correction is represented by the family of so-called error correcting codes (ECC) which also involve the creation of a number of redundant bits for each data block. Common generic names for some of these are fire codes and Reed-Solomon codes. These can detect many errors in a block of data, and allow, in addition, several faulty bits in a block to be corrected. A well-known limitation of such ECCs is that they cannot correct more than a few bit errors in a block, nor can they correct more than one or two widely spaced bit errors. Thus, they are particularly suited for correcting so-called burst errors where the errors are concentrated within a few bits from each other as may occur on magnetic media. Accordingly, it is the practice to use ECC redundancy within such types of data storage systems as disk and tape drives.

Readback electronics are also likely to produce occasional errors, but these are usually either random single bit errors widely spaced from each other, or errors spaced from each other at regular and relatively short intervals. These random errors are usually "soft", i.e. they do not repeat and hence can be corrected by re-reading the data from the data storage medium. Post-readback byte parity redundancy (hereafter byte parity) may be used to detect these errors. By byte parity is meant the insertion at regular intervals (i.e. with each byte), in the data just after readback, a parity bit which provides parity error detection for the associated byte. Regularly spaced errors are usually indicative of a failure after the serial to parallel conversion during readback. Such errors are not so easily corrected but can at least be detected by byte parity redundancy added to the data after it is read from the data storage medium. It is the usual practice to use ECC redundancy on the data storage medium itself and both byte parity and ECC redundancy during readback so as to provide maximum confidence in the integrity of the data manipulations during readback without a great amount of redundant data stored on the data storage medium. Further, it is preferred to overlap the two sets of redundant information so that no part of the data pathway is unprotected by error detection/correction.

It is also known to use row and column error correction as described above in magnetic tape data storage systems. If the same bit in a number of rows fail, this method allows reconstruction of the columns so affected. This usually is the result of a failure in the head or electronics for the column since a tape data storage medium defect is almost never restricted to a single bit position from row to row.

It is now possible to design a typical state-of the-art data storage system having multiple data storage units so that failure of a single storage unit occurs independently of, and without affecting the availability of similar units. For example, each may have its own power supply and controller, now technically possible at modest additional cost.

Document EP-A-156724 relates to a method of writing and reading numerical information in a mass memory comprising a plurality of disk units. At the time of transfer of information to or from the disk units, the bits making up one word of information are transmitted simultaneously, each bit being allocated to a disk unit associated with the weight of said bit in said word. In order to be written or read synchronously with the other bits of the same word at a physical address which is a univocal function of the logic address of said word of information, said physical address defining for each disk unit the effective location where said bit will be written or read. That is, defining the disk of said unit, the number of the track of this disk and the location of said bit on this track.

According to the present invention there is provided a data storage system in which data to be stored is divided into three or more sub-blocks with the generation according to a preselected algorithm of a reconstruction sub-block thereby permitting the reconstruction of one data sub-block using the reconstruction sub-block and the other data sub-blocks according to a data reconstruction algorithm and in which the sub-blocks, including the reconstruction sub-block, are stored on four or more data stores together with a respective error correcting code generated for and stored with each sub-block, each data store being substantially physically independent from the other data stores and liable to independent failure characterised by a plurality of error detection and correction means each for detecting and correcting errors in a respective data sub-block using the respective error correcting code in an attempt to correct errors encountered on retrieval from a data store of a data sub-block and for generating a respective error signal on failure to correct all errors in the respective data sub-block, means for employing the data reconstruction algorithm using the data sub-blocks and the reconstruction sub-block to provide correction data in response to an error signal from the error detection and correction means, and means for applying the correction data to a data sub-block detected as still faulty.

In this invention, for example, a data block is split into a number of data sub-blocks, each of which is encoded for storage in a different data storage unit (DSU) along with its own error detection and correction information. A sub-block consists of a fixed number of bits organised in a sequence allowing each bit to be identified by its position in the sequence. For the purpose of implementation, each sub-block bit is associated with the similarly positioned bits in the other sub-blocks to form a bit row. It is desirable (for the purposes of maximising speed of operation) that the storage units be approximately synchronised so that the sub-blocks are read back within approximately the same interval and at approximately the same bit rate.

The data storage system generates a redundant data sub-block for the data sub-blocks according to a pre-selected algorithm for which a data reconstruction algorithm exists permitting reconstruction of any one data sub-block using the remaining data sub-blocks and the redundant data sub-block. Preferably, the redundant data sub-block comprises a set of parity bits, one parity bit being associated logically and positionally with each bit row. Another, redundant, data storage unit stores this redundant data block. During writing, it is convenient to generate the redundant data sub-block bit by bit as the bit rows are supplied to the data storage units so as to allow the redundant data block to be stored concurrently with the data blocks. During readback of a particular block, each redundant data block bit can be made available at about the same time its row is.

The odds are extremely remote that two modern data storage units will fail simultaneously. Thus, when a single storage unit fails, the error detection mechanism associated with it generates an error signal. As previously stated, it is extremely unlikely that an error can occur in any column (or sub-block) without being detected by the associated column error detectors. Detection of an error in a sub-block is used to activate data reconstruction means operating on the individual rows. Each row having a parity error is corrected by inverting the bit in the column for which the error signal was generated. The data storage system of the present invention in its preferred embodiment can correct several types of multiple errors.

By far the most likely multiple error failure mode is for a single data sub-block to contain all the errors. The physical basis for this is that a defect in the data recording medium or circuitry of a single data storage unit may well affect more than one bit in a sub-block, or for that matter, many sub-blocks being stored in the same storage unit. As mentioned earlier, since failure of even one of the data storage units is a rare event, the failure of two within a short period of time is extraordinarily rare.

Preferably the data storage system includes byte error code generating means for receiving a data sub-block signal from a data storage unit, for providing to the error detection means a signal encoding a byte error detection code associated with at least one byte within the sub-block, said byte error detection code generated according to a preselected byte error detection algorithm which includes as a part thereof steps by which certain data errors in each said byte may be detected; and byte error detection means for receiving each byte error detection code signal and a signal encoding the byte for which it was generated, for applying the error detection algorithm to each said byte and its associated byte detection code and responsive to detection of an error in said byte, issuing a byte error signal associated with the byte having the error and its sub-block, the data redundancy means including means for generating according to the preselected algorithm a redundant data sub-block whose data reconstruction algorithm permits reconstruction of a byte within a data sub-block using an associated byte in the redundant sub-block and an associated byte from each of the other data sub-blocks, the data reconstruction means including means for receiving the byte error signal, for employing the data reconstruction algorithm to recreate and encode in the output data signal the data sub-block byte originally stored within the data storage unit. Note that this approach allows correction of more than one error occurring in different sub-blocks of the same block so long as more than one of a group of associated sub-block bytes does not have errors.

This data storage system is particularly suitable for implementation as a disk drive data storage system. As mentioned earlier, it is advantageous to increase data transfer rates by simultaneously reading and writing several data storage units simultaneously. It is relatively easy to design a system so that most disk drive failures are independent, i.e. are unlikely to cause any of the other drives to fail.

The present invention seeks to provide a data storage system: to reduce the probability of losing data to a small fraction of the probability of an individual storage unit failing; to allow data storage units to be simultaneously written and read to increase data rates; to avoid any interruption in operation of a data processing system caused by failure of a single data storage unit; to avoid the necessity for and expense of emergency maintenance; to allow maintenance necessitated by failure of an individual data storage unit to be deferred to a scheduled maintenance time, typically much less expensive; and to allow a failed data storage unit to be taken off-line and repaired while the rest of the data storage system functions with the error correction active and so permit uninterrupted data storage system operation during such repair.

The invention is illustrated, merely by way of example, in the accompanying drawings, in which:-
Figure 1 is a block diagram of a simplified data storage system according to the present invention; and
Figure 2 is a detailed block diagram of data reconstruction circuitry of a data storage system according to the present invention.

A data storage system according to the present invention and described below has fewer than the number of data storage units one would normally select. However, the number selected (4) accurately illustrates a data storage system operating according to the present invention and avoiding the confusion which adding the likely more preferable 8 or 9 data storage units might create. Note that many different configurations of data storage system according to the present invention are possible. The various details of this embodiment are merely illustrative, and not intended to exclude others. For example, many variations in logic circuitry are possible to implement functions described. As the explanation proceeds, possible variations will be mentioned on occasion, however, so as to allow the reader to understand the many specific configurations which the invention may have.

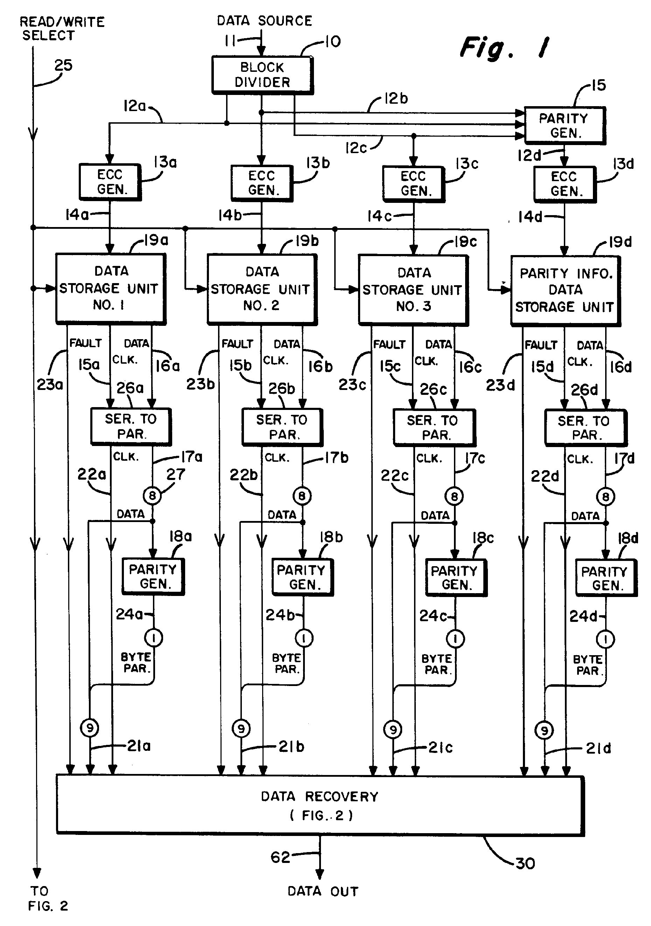

The present invention is described with reference first to Figure 1 which is a block diagram of a data storage system according to the present invention comprised of individual data storage sub-system blocks. Many of the individual blocks represent one or more micro-circuit elements commonly available today. Other elements, such as data storage units (DSUs) 19a,19b,19c, 19d are well-known devices which may be, for example, disk drive units as mentioned previously. Individual blocks are connected by data paths over which individual bits represented by electrical pulses flow. Unless indicated otherwise by a small circle with a number in it (e.g. ref. no. 27) specifying the number of parallel lines represented, it should be assumed that a data flow on an individual path is serial, i.e. individual bits are provided sequentially to the destination block or that the path carries a control signal of some type.

It should also be understood that no attempt is made in the drawings to show the explicit timing relationships needed to allow the data storage system to function properly. Such timing considerations are well understood and hence need not be discussed in detail. Moreover, the following description either explicitly or implicitly establishes all of the timing relationships necessary to understand and implement the present invention.

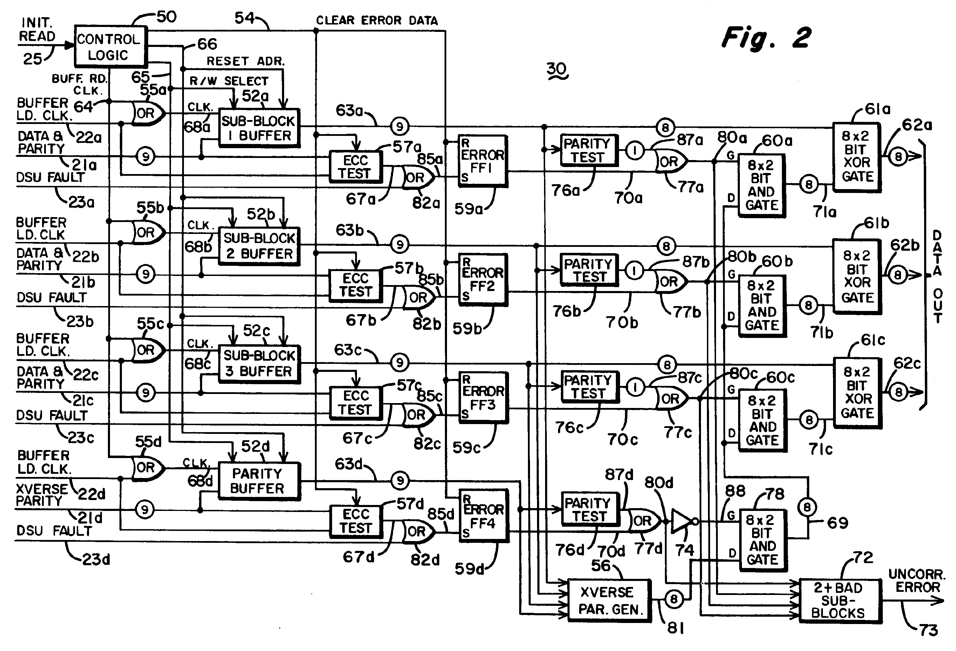

It will be noted that Figure 2 contains much more detail than Figure 1. This is because Figure 1 is concerned mostly with the writing of data in a format permitting its correction by the data reconstruction circuitry of Figure 2. The correction or reconstruction of the data is an inherently more complex problem than mere recording of the original data with the redundancy needed to permit the correction. Thus it is necessary to describe reading apparatus in greater detail than writing apparatus.

Turning first to Figure 1, data blocks, each comprising a fixed number of bits, can be considered to become available one at a time from an external data source on a data path 11 when the data storage system of Figure 1 is idle or otherwise able to accept a data block. It is convenient to assume that each data block has the same number of bits in it, typically in the thousands or tens of thousands of bits. The data on the path 11 is received by a block divider 10 which divides the data block into three sub-blocks of equal length which are transmitted on data paths 12a,12b,12c to ECC generators 13a,13b,13c respectively. The block divider 10 can be designed to operate in one of two modes, either of which is acceptable. In the first mode, a serial order is established for all the bits in the data block on the path 11 and then the first, fourth, seventh, etc. are placed on the path 12a; the second, fifth, eighth, etc. on the path 12b; and the third, sixth, ninth, etc. on the path 12c. Alternatively, the block divider 10 can divide each data block into sequential groups of bits, or bytes, placing each first group sequentially on the path 12a, each second group on the path 12b, and each third group on the path 12c.

Further, it is convenient to specify a sequence for the bits comprising each data sub-block, and to associate the bits occupying the same position in the sequence in each data sub-block. Each such group of bits, each bit in a group being from a different data sub-block, will be referred to hereafter as a row from the analogy to a bit matrix where each data sub-block comprises a column. In this embodiment, the bits comprising each row are issued simultaneously by the block divider 10. It is immaterial whether bits are provided serially or in parallel on the paths 12a,12b, 12c, although the elements receiving signals on these paths must be compatible with the format chosen.

The ECC generators 13a,13b,13c are substantially identical devices which generate error correction and detection data for each data sub-block which is received on their respective input data paths 12a,12b,12c. The ECC code for each data sub-block is generated as the data sub-block is received, and the data is passed through the ECC generator involved and encoded in a signal placed on an associated path 14a,14b,14c. At the end of the data sub-block, the ECC code value has been determined and is encoded and appended to the signal for each path 14a,14b,14c. As mentioned earlier, the algorithm used by the ECC generators 13a,13b,13c provides a very high likelihood of detecting any errors in the data sub-block.

A row parity generator 15 also receives the data sub-blocks row by row on the paths 12a,12b,12c from the block divider 10. Recall of the data bits forming each row are simultaneously presented in the signals on the paths 12a,12b,12c. The parity generator 15 determines the parity of each row of bits simultaneously presented to it on the paths 14a,14b,14c and a few tens of nanoseconds later provides a signal encoding this parity on a path 12d, thereby preserving approximate synchronisation between the data on the paths 12a,12b, 12c and the associated row parity bits on the path 12d. As a practical matter a few tens of nanoseconds are negligible compared to the duration of one bit interval on the paths 12a,12b,12c. The ECC generators 13a,13b, 13c,13d can all be considered to be similar devices having identical speeds. Thus, the data storage units (DSUs) 19a,19b,19c,19d in effect simultaneously receive each row and the row parity which has been calculated for it by the parity generator 15. If the parity generator 15 is so slow that it destroys the synchronism between the bit rows and their individual row parity bits, then it is a simple matter to deal with this problem by, for example, inserting signal delays in the paths 14a,14b,14c.

While each row with its parity need not, in the general case, be presented simultaneously to the DSUs 19a,19b,19c,19d, it is usually preferred to do so, so that each DSU 19a,19b,19c,19d is active at the same time, increasing the bit storage rate. In data storage systems which use disks as the data storage medium in the data storage units, synchronising disk rotation results in very increases in both storage and retrieval speed if the bits of each row are simultaneously presented to their data storage units.

At the time that the data block to be stored in the DSus 19a,19b,19c is placed on the path 11, a signal is also placed on a read/write control path 25 which specifies that writing or storage of data is desired, and also specifies the physical location on the disks at which the data block is to be stored. The source of this signal may be a CPU (central processing unit, i.e. computer) which uses the data storage system of Figure 1 as a peripheral device, or it may be a system controller or may have parts supplied by both.

The purpose of the present invention is to deal with a failure of one of the DSUs 19a,19b,19c by using the redundancy supplied to the system by the DSU 19d to recreate the data. To justify the cost of an additional DSU, the units must be relatively cheap in comparison to the data to be stored. Further, failure of one DSU must in most cases be independent of failure of the others. That is, the cause of a failure must usually be of the type which causes only a single one of the DSUs to fail, so as to allow the data storage system of the present invention to recover or recreate the data. Examples of such kinds of failures are power supply and fuse failures, logic and signal processing failures, head and data storage medium failures in magnetic tape and disk storage systems, bad cabling connections, etc.

Examples of non-independent failures which a data storage system of the present invention cannot correct are power failures which cause all DSUs to fail simultaneously, or failure of controller hardware, common to all the units. But if the failure is one where an individual one of the DSUs fails and other DSUs continue to perform normally, then the present invention can make a useful contribution to overall reliability of the data storage system.

Therefore, it is preferred that each DSU has its own controller so that controller failure is localised in a single DSU. Such DSUs fail relatively rarely, and failures are for the most part independent of each other.

If the DSUs 19a,19b,19c,19d are magnetic or optical disk drives, as is preferred, synchronising the disk rotation to each DSU allows bit space sequences on one disk to be permanently associated with similar sequences on the disks of other DSUs so that associated sequences pass beneath their read/write heads or transducer devices during nearly the same time interval. Such synchronisation has the further advantage of allowing simplified readback and true parallel data operation.

The DSUs 19a,19b,19c,19d all receive and store each set of three row bits and their associated parity bit very nearly simultaneously. As successive sets of rows and the associated parity bits are presented to the DSUs 19a,19b,19c,19d, these too are stored so that at the end of the data sub-blocks, the bits are arranged on the disks within the DSus 19a,19b,19c,19d in serial fashion. The individual data sub-blocks are followed by the aforementioned ECC information which is also stored serially on the disks of the DSUs. Thus, when writing of a block has been completed, each data sub-block has been serially stored with its ECC information appended. Further, because of the synchronisation of spindles carrying the disks of the individual DSUs, when the read/write heads are positioned in the tracks storing the data sub-blocks involved, the bits of each individual row will appear beneath the respective read/write heads at very close to the same instant.

It is usually the case that a particular data block is to be stored at a predetermined physical location on the disks of the DSUs 19a,19b,19c,19d. Thus, the data block must be presented to the block divider 10 at a time synchronised with the angular position of the spindles which carry the disk within the DSUs 19a,19b,19c,19d. Typically, the data source is itself signalled to begin transmitting the data block to be stored when the read/write heads have been properly positioned in the desired data tracks and the disks angular positions are such that the writing signals appear on the read/write heads as the desired physical lengths of the tracks are passing beneath the heads. Such synchronisation and coordination between the transmission of data from the source and the disk(s) on which it is to be stored is well-known.

During reading, control signal encoding the location of the desired data block issued to the individual DSUs 19a,19b,19c,19d on the path 25 cause the read/write heads to be positioned on the tracks containing the data sub-blocks of the desired data block. Further, the read/write signal on the path 25 specifies the desired function as reading. As the individual bit spaces move past the read/write heads, each of the DSUs 19a,19b,19c,19d encode in a raw data signal carried on paths 16a,16b,16c,16d respectively, the bits of the data sub-block stored in the track spaces specified by the read/write signal. Bits in the raw data signals are accompanied by clock (CLK) signals on paths 15a,15b,15c,15d as provided by the DSUs 19a, 19b,19c,19d involved. A set of serial to parallel circuits 26a,26b,26c,26d receives the raw data and clock signals from their respective DSUs 19a,19b,19c,19d and assembles each successive set of 8 bits into 8 bit parallel byte signals on paths 17a,17b,17c,17d followed a very short fixed interval later by a byte clock signal on the associated path 22a,22b,22c,22d.

Byte parity generators 18a,18b,18c,18d receive the 8 bit bytes on the paths 17a,17b,17c,17d respectively and generate an odd byte parity bit for the byte received, encoding this parity bit in signals on paths 24a,24b,24c,24d respectively The byte parity generators 18a,18b,18c,18d are of the type with such great internal speed relative to the time that a particular 8 bit byte signal is available on the paths 17a,17b,17c,17d that each 8 bit byte signal and its associated byte parity bit can be treated as a single 9 bit byte. This is symbolised by the combining of the parity signals on the paths 24a,24b,24c,24d with their related byte signals on paths 17a,17b,17c,17d to form 9 bit byte signals as encoded on paths 21a,21b,21c,21d. Thus, the clock signal on the respective clock signal path 22a,22b,22c,22d identifies the times at which individual data and row parity bits are present on the paths 21a,21b,21c,21d respectively. If errors occur in the data during later processing, testing this row parity is very likely to reveal such errors, and the capability of the error correction system to be described in relation to Figure 2 allows errors in different data sub-blocks to be corrected in many cases.

A data recovery system 30 receives these data and row parity signals and provides an output signal on the path 62 encoding the data block originally supplied on the path 11, correcting those errors which are correctable. Internal faults sensed by the DSUs 19a,19b,19c,19d are indicated to the data recovery system 30 on their respective fault signal paths 23a,23b,23c,23d. In many cases, this data storage system can also recover from complete loss of data on one of the DSUs 19a,19b,19c,19d as indicated by a fault signal on one of the paths 23a,23b,23c,23d.

Figure 2 discloses the details of the data recovery system 30 which allows the reconstruction of an entire data block stored on the DSUs 19a,19b,19c in spite of the presence of one or more otherwise uncorrectable errors in, or even the unavailability of, a constituent data sub-block stored on any one of the DSUs 19a,19b,19c. The earlier mentioned read command on the path 25 also signals a control logic element 50 to begin a read sequence, the steps of which will be described in conjunction with the description of Figure 2.

The major elements at the input side of readback circuitry are sub-block buffers 52a,52b,52c,52d, which store each entire data sub-block as they are received on the paths 21a,21b,21c,21d from the DSUs 19a,19b,19c,19d respectively. The buffers 52a,52b,52c,52d are similar devices from which the data sub-blocks are read and corrected if necessary. The byte parity, DSU fault signals, and the appended ECC information may all be used to determine need for corrections. Their use will be explained using the buffer 52a as an example. The buffer 52a has an internal pointer register for addressing its bit locations. This internal pointer register is initially cleared by a RESET ADR (ADdRess) signal on a path 66 generated in response to a read command on the path 25. The internal pointer register is incremented by one by each clock (CLK) signal pulse on a path 68a. When a read/write select (R/W SEL) signal on a path 65 is set to a logical 1, it places the buffer 52a in a write mode and individual 9 bit bytes can be loaded into the buffer 52a via the data path 21 and stored or written in the location in the buffer 52a specified by its internal pointer register. Successive clock pulses on the path 68a cause this internal pointer register to cycle through the internal memory of the buffer 52a and load successive bytes presented on the path 21a into the buffer locations specified by the internal pointer register.

When the path 65 carries a logical 0, the buffer 52a is set to a read mode and places on the data path 63a a signal encoding the contents of the byte location addressed by the internal pointer register. As the internal pointer register content is incremented by pulses on the path 68a, the path 63a successively carries signals encoding each byte stored in the buffer 52a. Further, when the buffer 52a first enters the read mode from the write mode, the correction part of the ECC algorithm by which the ECC information appended to the data on the path 21a is developed, is implemented within the buffer 52a to correct the data in the buffer 52a if necessary and possible. Similar activity is associated with each of the sub-block buffers 52b,52c,52d.

An ECC test element 57a is very closely related to the buffer 52a, and receives the data and byte parity signals on the paths 21a to perform the complementary function of detecting errors in the data. Errors detectable but uncorrectable by the ECC algorithm are independently signalled by the ECC test element 57a with a logical 1 on a path 67a. A logical 0 indicates either a data sub-block which has no errors in it or one in which errors have been corrected within the buffer 52a. ECC test elements 57b,57c,57d are similarly related to buffers 52b,52c,52d respectively and perform the same functions, providing a logical 1 signal on paths 67b,67c,67d when detectable but uncorrectable errors are present in the data sub-block just received, and a logical 0 otherwise. It is necessary to reset each test element 57a,57b,57c,57d before receipt of each data sub-block.

A read operation requested by a signal on the path 25 prompts the control logic device 50 to execute a signal sequence for first loading the individual data sub-blocks from the DSUs 19a,19b,19c,19d into the buffers 52a,52b,52c,52d respectively and then eventually placing the data sub-block bytes sequentially on paths 62a,62b,62c, corrected as necessary and possible. Initially, the control logic device 50 places a reset signal on the path 66 which sets the internal pointer registers in the buffers 52a,52b,52c,52d to the address of the first byte's location in each. It can be assumed shortly thereafter the DSUs 19a,19b,19c,19d start transmitting bits serially on the paths 16a,16b,16c,16d which are assembled into bytes and encoded in the signals on the paths 21a,21b,21c,21d, each byte being followed shortly by a loading clock (LD CLK) signal on the paths 22a,22b,22c,22d, all respectively.

Each LD CLK signal on the paths 22a,22b,22c,22d is applied to one input of an OR gate 55a,55b,55c,55d respectively which in response produces the clock pulses on paths 68a,68b,68c,68d needed to increment the internal pointer registers in the buffers 52a,52b,52c, 52d. Since the timing of the LD CLK signals is ultimately controlled by the DSUs 19a,19b,19c,19d individually, each of the buffers 52a,52b,52c,52d can be filled at the speed of its associated DSU 19a,19b,19c, 19d.

As each data or row parity sub-block byte on the paths 21a,21b,21c,21d is received by the buffers 52a,52b,52c,52d, the byte is also transmitted to the respective ECC test element 57a,57b,57c,57d. Before the start of transmission from the DSUs 19a,19b,19c,19d, the test elements 57a,57b,57c,57d receive on a path 54 the clear error data signal from the control logic device 50 which signal is used to initialise each test element. Each test element 57a,57b,57c,57d has an internal accummulator which contains during transmission of data bytes to it, the current results of the error detection algorithm employed by the test elements 57a,57b,57c,57d, and this is initially set to 0 in each by the clear error data signal on the path 54. The test elements 57a,57b,57c,57d also typically contain an internal counter, each of which is set to the number of bytes in a data sub-block by the signal on the path 54.

Each signal pulse on the paths 22a,22b,22c,22d causes its associated test element's counter to decrement by 1. When the counter has been decremented the number of times equalling the number of bytes in a data sub-block, the test element 57a,57b,57c,57d then uses the remaining bytes received as the error detection code and compares it to the contents of the associated internal accummulator to determine whether detectable but not correctable errors are present in the data transmitted on the associated paths 21a,21b,21c,21d. If no such errors are present in this data (or in the row parity information on the path 21d) a logical 0 is placed on the associated output paths 67a,67b,67c,67d. If an error is detected in this procedure, a logical 1 is placed on the path 67a,67b,67c,67d associated with the erroneous data or row parity.

As previously mentioned, there are several errors which can be sensed internally by the DSUs 19a,19b,19c, 19d, and whose occurrence is signalled on the associated fault signal path 23a,23b,23c,23d. The ECC test errors signalled on the path 67a,67b,67c,67d are provided with the DSU fault signals on the paths 23a,23b,23c,23d to the inputs of OR gates 82a,82b,82c,82d respectively. The OR gates 82a,82b,82c,82d thus provide an output signal which is a logical 1 when an error has been detected by either the associated DSUs 19a,19b,19c,19d or the associated test element 57a,57b,57c,57d. The output of the OR gates 82a,82b,82c,82d, form the inputs to the set (S) inputs of flip-flops 59a,59b,59c,59d respectively on paths 85a,85b,85c,85d.

At the start of each read operation, the flip-flops 59a,59b,59c,59d receive on their reset (R) inputs the clear error data signal provided on the path 54. This signal sets the initial state of the flip-flops 59a,59b,59c,59d to their cleared condition, where the logic levels of their outputs are 0. In response to a logical 1 on any of the paths 85a,85b,85c,85d, the associated flip-flop 59a,59b,59c,59d output on paths 70a,70b,70c,70d is set to a logical 1 Thus after each group of data sub-blocks comprising a data block having been loaded into the buffers 52a,52b,52c,52d, the outputs of the flip-flops 59a,59b,59c,59d indicate by a 0 or a 1 at their outputs whether the data sub-block in the associated buffer 52a,52b,52c,52d is respectively correct or in error. It should be noted that the logic circuitry handling the row parity sub-block stored in the row parity buffer 52d has some similarity to the logic circuitry handling the data sub-blocks.

When the data sub-blocks and the row parity sub-block have been loaded into the buffers 52a,52b,52c,52d respectively, and the error flip-flops 59a,59b,59c,59d have been set to indicate whether a data sub-block contains an error or not as just explained, then the remainder of the read process, including error correction if necessary, can proceed. The control logic device 50 resets the internal pointer registers in the buffers 52a,52b,52c,52d to the start of the data sub-blocks again within these buffers. The control logic device 50 also sets the output on the R/W SEL path 65 to a logical 0, conditioning the buffers 52a,52b,52c,52d to output the data stored in them on the paths 63a,63b,63c,63d. The control logic device 50 then issues read clock (RD CLK) pulses at a preset rate on a path 64 in a number equal to the number of bytes stored in a data sub-block. These are received by a second input terminal of the OR gates 55a,55b,55c,55d. Each of these pulses causes the OR gates 55a,55b,55c,55d to transmit a pulse on the paths 68a,68b,68c,68d respectively, causing the buffers 52a,52b,52c,52d to transmit one data sub-block byte stored within each of them on the paths 63a,63b,63c,63d. Each set of data bytes from the buffers 52a,52b,52c, and the row parity byte from the buffer 52d which issue in response to the same read clock pulse on the path 64 contains associated information for purposes of correcting a portion of the data. It should be noted that the buffers 52a,52b,52c,52d may be of the type which can be written into and read from simultaneously, in which case the buffers 52a,52b,52c,52d may be loaded by the next block to be read from the DSUs 19a,19b,19c,19d while the current block is undergoing any correction needed and transmission from the buffers.

A transverse parity generator 56 simultaneously receives the data and parity bytes which have been read from the buffers 52a,52b,52c,52d by the same read clock pulse on the path 64, and in response to this data generates, properly ordered, the 8 bits of the bit by bit odd parity of each set of four associated bits provided on the paths 63a,63b,63c,63d. That is, the bits from each of the bytes on the paths 63a,63b,63c,63d which occupy the same position in their respective bytes are used to generate the bit in the parity byte on the path 81 occupying the corresponding location. Odd parity is generated in each position so that if the bits involved are all correct, then the corresponding output parity bit on path 81 is a logical 0. If the parity of the four input bits is even, i.e. has one incorrect bit in it, then generating odd parity provides a logical 1 on the path 81 in the corresponding bit position.

An 8 X 2 bit AND gate array 78 receives the 8 bits carried in parallel on the path 81, properly ordered, at its 8 data (D) inputs and the output of an inverter (I) element 74 on a path 88 at each of its 8 gate (G) inputs. If the signal on the path 88 at the gate input is a logical 0, each bit of the 8 outputs on a path 69 from the AND gate 78 is also a logical 0. If the signal on the path 88 is a logical 1, the 8 data bits provided on the path 81 to the 8 data inputs of the AND gate array 78 are gated to the outputs of the path 69 making its signal identical to the signal on the path 81. It will be explained later how the gate input on the path 88 is set to a logical 1 if the parity information byte currently being processed appears to be correct.

Turning next to byte parity test elements 76a,76b,76c,76d, each of these sequentially receive the bytes placed on the paths 63a,63b,63c,63d by the respective buffers 52a,52b,52c,52d. The parity of each such byte is tested by the byte parity test element 76a, 76b,76c,76d receiving it, and if correct, a logical 0 is provided on associated path 87a,87b,87c,87d to the OR gate 77a,77b,77c,77d receiving the signal on the path as an input. If parity is tested to be incorrect, then a logical 1 is provided on the path 87a,87b,87c,87d respectively to the OR gate 77a,77b,77c,77d involved. As described above, each OR gate 77a,77b,77c,77d receives as its other input the output of the associated flip-flop 59a,59b,59c,59d.

The outputs of the OR gates 77a,77b,77c are provided on paths 80a,80b,80c respectively to the 8 gate (G) inputs of each of 8 X 2 bit AND gate arrays 60a,60b,60c. The 8 X 2 bit AND gate arrays 60a,60b,60c are identical in construction to that of the 8 X 2 bit AND gate array 78 and operate in the same way. The 8 X 2 bit AND gate arrays 60a,60b,60c receive at their 8 data (D) inputs the properly ordered 8 bit output of the 8 X 2 bit AND gate arrays 78 on the path 69. The 8 bit outputs of the AND gate arrays 60a,60b,60c on paths 71a, 71b,71c respectively thus duplicate the 8 bits on the path 69 if and only if the data sub-block associated with the 8 X 2 bit AND gate array 60a,60b,60c involved has an error in it as indicated by the logical 1 carried on the respective input path 80a,80b,80c.

An OR gate 77d receives the output of the flip-flop 59d on the path 70d and of the byte parity test element 76d on the path 87d at its two inputs. If either or both of these inputs is a logical 1, i.e. an error has been sensed as indicated by the flip-flop 59d or detected by the byte parity test element 76d, then the OR gate 77d produces a logical 1 encoded in the signal at its output on a path 80d. The output of the OR gate 77d is inverted by the inverter 74 and provided to the gate input of the 8 X 2 bit AND gate array 78 on the path 88. Thus, if the parity information byte on the path 81 has passed all of its error tests, a logical 1 is placed on the path 88 and the parity information byte is gated by the 8 X 2 bit AND gate array 78 on the path 69.

8 X 2 bit exclusive OR (XOR) gate arrays 61a,61b,61c each receive two properly ordered 8 bit parallel inputs on their two inputs and provide the bit by bit exclusive OR of these two inputs as their outputs. As is well-known, an exclusive OR element generates a logical 0 value if the two input arguments or signals are equal to each other, and a logical 1 value if the two arguments are unequal. Thus for each bit which is a binary or logical 1 on any of the 8 bit parallel paths 71a,71b,71c, the 8 X 2 bit XOR gate arrays 61a,61b,61c provide the inversion of the corresponding bit of the data sub-block bytes carried on the paths 63a,63b,63c as the output in the corresponding bit positions of 8 bit parallel data paths 62a,62b,62c. All of the bit values on the paths 63a,63b,63c for which the corresponding bit values on the paths 71a,71b,71c are a logical or binary 0, are provided unchanged in the corresponding bit position of the paths 62a,62b,62c. To reiterate, it is, of course, essential that proper order of bit positions in the path 63a with the path 71a, the path 63b with the path 71b, etc. be maintained.

Thus, if a row parity error is present in a set of bits occupying the same relative position in the buffers 52a,52b,52c,52d and one of the DSUs (via fault signals on the paths 23a,23b,23c,23d), byte parity tests (via byte parity test elements 76a,76b,76c) or ECC tests (test elements 57a,57b,57c) identifies the buffer in which the erroneous bit is located, the bit is inverted by the 8 X 2 bit XOR gate 61a,61b,61c receiving it on the respective path 63a,63b,63c. This corrects that bit in that its changed value causes its associated bits in the remaining two of the three buffers 52a,52b,52c and the row parity buffer 52d to agree parity-wise.

An example is helpful here. Assume that during readback of a data sub-block from the DSUs 19a,19b,19c, 19d an error is detected in data sub-block 2 by the test element 57b. This causes the flip-flop 59b to be set, with a logical 1 present on its output path 70b. At some time while the individual 8 bit bytes are issuing on the paths 63a,63b,63c,63d further assume that the transverse parity generator 56 provides an output on the path 81 in which a single bit is set to a logical 1. Let us assume that the data bit corresponding to this logical 1 on the path 81 and carried on the path 63b is also a logical 1. If a logical 0 is present on the path 80d indicating that according to conditions controlling its value the row parity sub-block in the row parity buffer 52d is correct, then the parity byte on the path 81, including at least one logical 1 bit generated by the parity generator 56 and identifying the location of the bit in error on the path 63b is gated to the path 69. This 8 bit byte is further gated by the logical 1 generated on the path 80b by the OR gate 77b to the path 71b. The bit on the path 63b having the same bit position as the logical 1 on the path 71b from the 8 X 2 bit AND gate 60b is inverted by the 8 X 2 bit XOR gate 61 and issues as a logical 0 on the path 62b because both inputs at that bit position have the same value, in this case 1. The logical 0 on the path 62b at the position of interest here is the inverse of the logical 1 on the path 63b which was read from the DSU 19b. In all likelihood, this bit (and perhaps others as well in this data sub-block stored in the buffer 52b) is incorrect, and by inverting this bit from the buffer 52b, the correct value for the bit is encoded in the signal on the path 62b. Note that inverting a single bit in any group of four for which parity is calculated by the transverse parity generator 56 changes the parity for that group, in effect correcting it.

The unlikely event of two or more data and row parity sub-blocks of a data block being in error is dealt with by supplying the outputs from the OR gates 77a,77b,77c,77d to a "2+ bad sub-blocks" element 72. If two or more logical 1s are presented on the path 80a,80b,80c,80d to the element 72, this indicates that two or more of the data sub-blocks of a data block have errors in them. In response to this condition, the element 72 provides a signal on a path 73 which indicates to the CPU or other external device that uncorrectable errors are present in the block.

Note that for byte parity errors detected by the byte parity test elements 76a,76b,76c,76d, it is possible that for successive bytes, different data sub-blocks may contain the error(s) and yet be correctable. This is because the byte parity generated by the byte parity generators 18a,18b,18c,18d shown in Figure 1 is localised to the single byte involved, and hence need not affect the correction of similar errors occurring in non-associated bytes in other sub-blocks. Note also that if a DSU or ECC fault is detected for a particular data sub-block as indicated by the appropriate flip-flop 59a,59b,59c,59d, a byte parity error in a different data sub-block can no longer be corrected. This condition is flagged by the element 72.

It is well-known that the function of logic circuitry such as that described above can be duplicated by many different logic structures. For example, selection of logical 0 and 1 values is somewhat arbitrary in that these terms really represent only voltage levels and individual circuit responses to these voltages. These conventions and others as well are well-known to those having familiarity with logic design, and no particular note need be taken of such.

As was mentioned previously, it is also important to realise that use of only three DSUs 19a,19b,19c to store data is probably not the number that a typical commercial data storage system according to the present invention would have, since the reliability of these DSUs justifies in most cases that eight or more be united in a single data storage system. The configuration of the buffers 59a,59b,59c,59d in storing 8 bit parallel bytes is arbitrary as well. In such a complex electronic data storage system as is described above, it is to be expected that many alternatives are possible to provide a data storage system having similar capabilities.

## Claims

1. A data storage system in which data to be stored is divided into three or more sub-blocks with the generation according to a preselected algorithm of a reconstruction sub-block thereby permitting the reconstruction of one data sub-block using the reconstruction sub-block and the other data sub-blocks according to a data reconstruction algorithm and in which the sub-blocks, including the reconstruction sub-block, are stored on four or more data stores together with a respective error correcting code generated for and stored with each sub-block, each data store being substantially physically independent from the other data stores and liable to independent failure characterised by a plurality of error detection and correction means (57a, 57b, 57c) each for detecting and correcting errors in a respective data sub-block using the respective error correcting code in an attempt to correct errors encountered on retrieval from a data store of a data sub-block and for generating a respective error signal on failure to correct all errors in the respective data sub-block, means for employing the data reconstruction algorithm using the data sub-blocks and the reconstruction sub-block to provide correction data in response to an error signal from the error detection and correction means (57a, 57b, 57c), and means (61a, 61b, 61c) for applying the correction data to a data sub-block detected as still faulty.

2. A data storage system as claimed in claim 1, further including a block divider for dividing the data into n blocks.

3. A data storage system as claimed in any preceding claim, in which each block is the same size.

4. A data storage system as claimed in claim 2, in which each of the data stores have corresponding address ranges and wherein the data blocks and associated reconstruction data blocks are stored at the same addresses in different data stores.

5. A data storage system as claimed in claim 4, in which the data stores are synchronised.

6. A data storage system as claimed in any one of claims 2 to 5, in which said block divider divides the data into n blocks in sequence and the system further includes deserialiser means for reassembling the data from the correct data blocks.

7. A data storage system as claimed in any one of the preceding claims, in which each of the data stores is capable of storing a plurality of blocks and selectively enabling a desired block to be read in response to a read signal.

8. A data storage system as claimed in any one of the preceding claims in which each said error detection and correcting means comprises byte error code generating means (18a, 18b, 18c), for receiving the data block and encoding a byte error detection code in the data block, test means (57a,57b,57c) for detecting and correcting errors using the error correcting code and byte error detection code, and means (59a,59b,59c) coupled to the data store and the test means for generating the error signal.

9. A data storage system as claimed in claim 8 further including a transverse parity generator (56) for receiving two or more of the data blocks and associated byte error detection code.

## Patentansprüche

1. Datenspeichersytem, bei dem zu speichernde Daten in drei oder mehr Teilblöcke unter Erzeugung eines Rekonstruktions-Teilblockes gemäß einem vorher ausgewählten Algorithmus unterteilt werden, wodurch die Rekonstruktion eines Daten-Teilblockes unter Verwendung des Rekonstruktions-Teilblockes und der anderen Daten-Teilblöcke entsprechend einem Daten-Rekonstruktionsalgorithmus ermöglicht wird, und bei dem die Teilblöcke unter Einschluß des Rekonstruktions-Teilblockes auf vier oder mehr Datenspeichern zusammen mit einem jeweiligen Fehlerkorrekturcode gespeichert werden, der für jeden Teilblock erzeugt und mit diesem gespeichert wird, wobei jeder Datenspeicher im wesentlichen physikalisch unabhängig von den anderen Datenspeichern ist und der Gefahr eines unabhängigen Ausfalls ausgesetzt ist, gekennzeichnet durch eine Vielzahl von Fehlererkennungs- und Korrektureinrichtungen (57a, 57b, 57c) jeweils zur Erkennung und Korrektur von Fehlern in einem jeweiligen Daten-Teilblock unter Verwendung des jeweiligen Fehlerkorrekturcodes in einem Versuch, Fehler, die bei der Wiedergewinnung eines Daten-Teilblockes aus einem Datenspeicher auftreten, zu korrigieren, und zur Erzeugung eines jeweiligen Fehlersignals bei der Unmöglichkeit, alle Fehler in dem jeweiligen Daten-Teilblock zu korrigieren, Einrichtungen zur Verwendung des Datenrekonstruktionsalgorithmus unter Verwendung der Daten-Teilblöcke und des Rekonstruktions-Teilblockes zur Lieferung von Korrekturdaten in Abhängigkeit von einem Fehlersignal von den Fehlererkennungs- und Korrektureinrichtungen (57a, 57b, 57c), und Einrichtungen (61, 61b, 61c) zum Anwenden der Korrekturdaten auf einen Daten-Teilblock, der immer noch als fehlerhaft erkannt wird.

2. Datenspeichersystem nach Anspruch 1, das weiterhin einen Blockteiler zum Aufteilen der Daten in n Blöcke einschließt.

3. Datenspeichersystem nach einem der vorhergehenden Ansprüche, bei dem jeder Block die gleiche Größe aufweist.

4. Datenspeichersystem nach Anspruch 2, bei dem alle Datenspeicher entsprechende Adressenbereiche aufweisen und bei dem die Datenblöcke und die zugehörigen Rekonstruktions-Datenblöcke an der gleichen Adresse in unterschiedlichen Datenspeichern gespeichert sind.

5. Datenspeichersystem nach Anspruch 4, bei dem die Datenspeicher miteinander synchronisiert sind.

6. Datenspeichersystem nach einem der Ansprüche 2 bis 5, bei dem der Blockteiler die Daten in n Blöcke in einer Folge unterteilt und das System weiterhin Entserialisierungseinrichtungen zum erneuten Zusammensetzen der Daten von den richtigen Datenblöcken einschließt.

7. Datenspeichersystem nach einem der vorhergehenden Ansprüche, bei dem jeder der Datenspeicher eine Vielzahl von Blöcken speichern und selektiv das Lesen eines gewünschten Blockes in Abhängigkeit von einem Lesesignal ermöglichen kann.

8. Datenspeicherssystem nach einem der vorhergehenden Ansprüche, bei dem jede Fehlererkennungs- und Korrektureinrichtung Byte-Fehlercode-Generatoreinrichtungen (18a, 18b, 18c) zum Empfang des Datenblocks und zur Codierung eines Byte-Fehlererkennungscodes in dem Datenblock, Testeinrichtungen (57a, 57b, 57c) zur Erkennung und Korrektur von Fehlern unter Verwendung des Fehlerkorrekturcodes und des Byte-Fehlererkennungscodes, und mit dem Datenspeicher und den Testeinrichtungen gekoppelte Einrichtungen (59a, 59b, 59c) zur Erzeugung des Fehlersignals umfaßt.

9. Datenspeichersystem nach Anspruch 8, das weiterhin einen Querparitäts-Generator (56) zum Empfang von zwei oder mehr Datenblöcken und zugehörigen Byte-Fehlererkennungscodes einschließt.

## Revendications

1. Système de mémoires de données dans lequel les données à mémoriser sont partagées en trois sous-blocs ou davantage avec génération d'un sous-bloc de reconstruction selon un algorithme de reconstruction sélectionné d'avance en permettant ainsi de reconstruire un sous-bloc de données en employant le sous-bloc de reconstruction et les autres sous-blocs de données, selon un algorithme de reconstruction des données, et dans lequel les sous-blocs, y compris le sous-bloc de reconstruction, sont mémorisés dans quatre mémoires de données ou davantage en même temps qu'un code de correction d'erreurs correspondant, généré et mémorisé pour chaque sous-bloc, chaque mémoire de données étant sensiblement indépendante physiquement des autres mémoires de données et sujette à une défaillance indépendante, caractérisé par une pluralité de moyens (57a, 57b, 57c) de détection et de correction d'erreurs dont chacun est destiné à détecter et à corriger des erreurs dans un sous-bloc de données correspondant en appliquant le code correspondant de correction d'erreurs dans une tentative pour corriger des erreurs rencontrées en recherchant dans une mémoire de données un sous-bloc de données, et pour générer un signal d'erreur correspondant en cas d'échec de la correction de toutes les erreurs dans un sous-bloc de données correspondant, des moyens pour appliquer l'algorithme de reconstruction des données en utilisant les sous-blocs de données et le sous-bloc de reconstruction en vue d'établir des données de correction en réponse à un signal d'erreurs venant des moyens (57a, 57b, 57c) de détection et de correction d'erreurs, et des moyens (61a, 61b, 61c) pour appliquer les données de correction à un sous-bloc de données détecté comme étant encore erroné.

2. Système de mémoires de données selon la revendication 1, comprenant en outre un diviseur de blocs pour partager les données en n blocs.

3. Système de mémoires de données selon l'une quelconque des revendications précédentes, dans lequel tous les blocs ont la même dimension.

4. Système de mémoires de données selon la revendication 2, dans lequel chacune des mémoires de données comprend des plages d'adresses correspondantes et dans lequel les blocs de données sont mémorisés avec des blocs associés de données de reconstruction aux mêmes adresses dans différentes mémoires de données.

5. Système de mémoires de données selon la revendication 4, dans lequel les mémoires de données sont synchronisées.

6. Système de mémoires de données selon l'une quelconque des revendications 2 à 5, dans lequel ledit diviseur de blocs partage les données en n blocs en séquence, le système comprenant en outre des moyens de réassemblage pour assembler à nouveau les données à partir des blocs de données corrects.

7. Système de mémoires de données selon l'une quelconque des revendications précédentes, dans lequel chacune des mémoires de données est capable de mémoriser une pluralité de blocs et de permettre de lire sélectivement un bloc désiré en réponse à un signal de lecture.

8. Système de mémoires de données selon l'une quelconque des revendications précédentes, dans lequel chaque moyen de détection et de correction d'erreur comprend des moyens (18a, 18b, 18c) générateurs de code d'erreur d'octet, pour recevoir le bloc de données et coder un code de détection d'erreur d'octet dans le bloc de données, des moyens de test (57a, 57b, 57c) pour détecter et corriger des erreurs en utilisant le code de correction d'erreur et le code de détection d'erreur d'octet, et des moyens (59a, 59b, 59c) couplés à la mémoire de données et aux moyens de test pour générer le signal d'erreur.

9. Système de mémoires de données selon la revendication 8, comprenant en outre un générateur de parité transversale (56) pour recevoir deux blocs de données ou davantage ainsi que le code de détection d'erreur d'octet associé.
